# EUROPÄISCHE PATENTSCHRIFT

(11) **EP 3 655 277 B1**
(45) Veröffentlichungstag und Bekanntmachung des Hinweises auf die Patenterteilung: **24.11.2021**
(21) Anmeldenummer: 18746831.9
(22) Anmeldetag: 16.07.2018
(51) Int. Cl.: B60K 6/387, B60K 6/48

(54) **HYBRIDMODUL**
HYBRID MODULE
MODULE HYBRIDE

(30) Priorität: 17.07.2017 DE 102017116052; 18.12.2017 DE 102017130266
(43) Veröffentlichungstag der Anmeldung: 27.05.2020
(73) Patentinhaber: Schaeffler Technologies AG & Co. KG, 91074 Herzogenaurach (DE)
(72) Erfinder: REIMNITZ, Dirk, 77815 Bühl (DE)
(86) Internationale Anmeldenummer: PCT/DE2018/100648
(87) Internationale Veröffentlichungsnummer: WO 2019/015723

(56) Entgegenhaltungen:
- WO-A1-2016/169562
- WO-A1-2017/088869
- WO-A2-2012/006978
- DE-A1-102009 030 976

## Beschreibung

Die Erfindung betrifft ein Hybridmodul für einen Antriebsstrang eines Kraftfahrzeugs gemäß dem Oberbegriff des Anspruchs 1, umfassend eine Elektromaschine, eine Kupplungsvorrichtung sowie eine Trennkupplung, wobei die Trennkupplung einerseits mit einem Zweimassenschwungrad und andererseits mit einer Zwischenwelle gekoppelt ist und ein in Reibschluss bringbares Paket umfassend eine Anpressplatte, eine Gegenplatte sowie wenigstens eine Zwischenplatte und zwischen diese eingreifende Kupplungsscheiben aufweist, wobei die Anpressplatte, die Zwischenplatte und die Kupplungsscheiben axial bewegbar sind.

Ein solches in einem Antriebsstrang eines Kraftfahrzeugs verbautes Hybridmodul dient bekanntlich dazu, das Fahrzeug entweder allein über einen über das Hybridmodul zuschaltbaren Verbrennungsmotor, über eine Elektromaschine, also einen Elektromotor oder über beide anzutreiben respektive über die Elektromaschine im Bedarfsfall Energie zu rekuperieren und so während der Fahrt oder im Stillstand des Fahrzeugs die Batterie zu laden, wozu die Elektromaschine, dann angetrieben über den Verbrennungsmotor, im Generatorbetrieb läuft.

Das Hybridmodul erlaubt es also, wahlweise die Verbrennungsmaschine, also den Brennkraftmotor, die Elektromaschine oder beide drehmomentübertragend in den Antriebsstrang zu schalten, wozu diverse Kupplungen vorgesehen sind. Das Hybridmodul selbst wird an einer Seite mit dem Verbrennungsmotor gekoppelt, wobei an dieser Seite das Zweimassenschwungrad, vorgesehen ist, also ein Schwungrad, dem eine Trennkupplung folgt. Bei geschlossener Trennkupplung kann das vom Verbrennungsmotor erzeugte Drehmoment auf eine mit der Trennkupplung gekoppelte Zwischenwelle übertragen werden, die drehfest mit dem Rotor der Elektromaschine verbunden ist. Der Rotor der Elektromaschine wiederum ist über eine Kupplungsvorrichtung, bei der es sich um eine trockene oder nasse Einfach- oder Doppel- respektive Mehrfachkupplung handeln kann, mit einer oder mehreren Abtriebswellen, die zum Getriebe führen, verbunden. Über die Trennkupplung kann folglich der Verbrennungsmotor zugeschaltet und geregelt werden, ob und welches Drehmoment zwischen dem Verbrennungsmotor und der Elektromaschine respektive deren Rotor übertragen wird. Über den Rotor und die nachgeschaltete Kupplungseinrichtung kann dieses Drehmoment sodann auf die eine oder die mehreren Abtriebswellen übertragen werden. Das verbrennungsmotorseitig erzeugte Drehmoment kann in beide Richtungen übertragen werden. Der Verbrennungsmotor überträgt beispielsweise beim verbrennungsmotorischen Fahren und/oder beim Laden der Batterie ein Drehmoment auf die Elektromaschine, während die Elektromaschine beispielsweise zum Starten des Verbrennungsmotors oder zum Nutzen der Motorbremsfunktion ein Drehmoment auf den Verbrennungsmotor überträgt.

Zwischen dem Rotor der Elektromaschine und dem Getriebe wird das Drehmoment wie beschrieben über die Einzel-, Doppel- oder Mehrfachkupplung übertragen. Soll das Fahrzeug rein elektrisch fahren, so ist die Trennkupplung geöffnet, der Verbrennungsmotor ist nicht zugeschaltet. Die Elektromaschine arbeitet, das rotorseitig erzeugte Drehmoment wird über die Kupplungsvorrichtung auf die Abtriebswellen übertragen.

Auch ein gleichzeitiger Betrieb beider Antriebsmittel ist denkbar, das heißt, dass sowohl der Verbrennungsmotor als auch die Elektromaschine über die jeweiligen Kupplungen zugeschaltet sind, wobei das elektromaschinenseitig erzeugte Drehmoment dem motorseitig erzeugten Drehmoment überlagert wird.

Zumeist wird ein solches Hybridmodul als sogenanntes P2-Hybridmodul ausgeführt, bestehend aus einer trockenen Trennkupplung, einer nassen Doppelkupplung, den entsprechenden Kupplungsbetätigungssystemen, die also zum Öffnen und Schließen der jeweiligen Kupplung dienen, und der Elektromaschine, wobei die einzelnen Komponenten möglichst kompakt ausgeführt und angeordnet sind. So wird beispielsweise die Doppelkupplung in den Rotor integriert, so dass sich ein axial kurzes Modul ergibt. Trotz des geringen verfügbaren Bauraums sind jedoch die Trennkupplung, üblicherweise K0 genannt, und die Doppelkupplung mit ihren einzelnen Teilkupplungen, üblicherweise K1 und K2 genannt, zwei auch einzeln funktionierende Kupplungsaggregate, die also separat voneinander betätigt werden können. Häufig wird auf eine Vollintegration der Trennkupplung in die Doppelkupplung trotz des dadurch erzielbaren Bauraumvorteils verzichtet, um die Trennkupplung und die Doppelkupplung einzeln oder zumindest die Hauptkomponenten der Kupplungen auch für andere Anwendungen nutzen zu können. Aus Sicherheitsgründen sind die Kupplungen selbstöffnende Kupplungen.

Um alle Komponenten in dem vorhandenen Bauraum unterzubringen, müssen die einzelnen Kupplungen radial kleinbauend ausgeführt werden. Alle drei Kupplungen werden daher in einer Mehrscheiben- oder Lamellenbauweise umfassend eine Mehrzahl an einzelnen Scheiben oder Platten realisiert wodurch pro Kupplung mindestens vier, üblicherweise mehr Reibflächen entstehen, die von der Kraft des jeweils mit der Kupplung verbundenen Betätigungssystems zusammengepresst werden können. Diese Betätigungssysteme sind zumeist innerhalb des Hybridmodulgehäuses aufgenommen und bestehen im Wesentlichen nur aus den Betätigungs- oder Stützlagern sowie Zylinder-Kolben-Baugruppen, die durch ein Druckmedium, das von Aggregaten au-ßerhalb des Hybridmodulgehäuses geliefert wird, betätigt werden. Hierzu werden die Kolben in den Zylindern verschoben und üben so eine Kraft aus, die über die Betätigungs- oder Stützlager auf die Kupplungen übertragen werden können. Alle drei Betätigungssysteme sind unabhängig voneinander ansteuerbar, so dass auch die drei Kupplungen unabhängig voneinander betätigt werden können. Als Druckmedium wird zumeist ein Hydrauliköl oder eine Bremsflüssigkeit eingesetzt, jedoch ist auch ein pneumatischer Betrieb denkbar.

Die Kupplungen des Hybridmoduls können nass oder trocken betrieben werden. Nass heißt, dass die Reibflächen der Kupplungen durch eine Flüssigkeit gekühlt und/oder die Reibverhältnisse durch eine Flüssigkeit beeinflusst werden. Dies erfordert eine entsprechende Abdichtung des jeweiligen Raums, in dem die Kupplung vorgesehen ist. Denkbar ist es, beispielsweise die Trennkupplung trocken und die Kupplungsvorrichtung, also beispielsweise die Doppelkupplung, nasslaufend auszuführen, und die beiden Räume über eine entsprechende Zwischenwand sowie eine geeignete Dichtung voneinander zu trennen. Auch ein umgekehrter Aufbau ist denkbar.

Aus der WO 2017/088869 A1 ist ein Hybridmodul bekannt, das auf den Oberbegriff des Anspruchs 1 lesbar ist.

Es besteht stets ein Bedürfnis, ein im Vergleich zu bekannten Hybridmodulen noch kompakteres Hybridmodul zu schaffen, weshalb der Erfindung die Aufgabe zugrunde liegt, ein ebensolches kompaktes Hybridmodul anzugeben.

Erfindungsgemäß gelöst wird diese Aufgabe durch ein Hybridmodul gemäß Anspruch 1. Bevorzugte Ausführungsbeispiele sind in den abhängigen Ansprüchen dargelegt.

Bei dem Hybridmodul ist vorgesehen, dass die Gegenplatte fest mit einem Außenlamellenträger verbunden ist, während die Zwischenplatte und die Anpressplatte am Außenlamellenträger über einen Verzahnungseingriff drehfest, jedoch axial bewegbar geführt sind, wobei der Außenlamellenträger über einen Verzahnungseingriff mit dem Zweimassenschwungrad gekoppelt ist, wobei ein oder mehrere den Verzahnungseingriff zwischen dem Außenlamellenträger und dem Zweimassenschwungrad in Umfangsrichtung vorspannende Federelemente vorgesehen sind.

Erfindungsgemäß ist vorgesehen, dass der Außenlamellenträger fest an der Gegenplatte befestigt ist, die ihrerseits axial positionsfest ist. Die Befestigung erfolgt beispielsweise mittels geeigneter separater Befestigungsmittel wie Nieten oder Schrauben, alternativ können auch eine oder mehrere Schweißverbindungen zur Verbindung der beiden Bauteile vorgesehen sein. Der Außenlamellenträger ist demzufolge integraler Teil der Trennkupplung und folglich der Getriebeseite zugeordnet. Die Zwischenplatte und die Anpressplatte sind an ihm axial bewegbar geführt, können also zum Zusammendrücken des Pakets axial verschoben werden, um das gesamte Paket in Reibschluss zu bringen. Zum Drehmomentübertrag, also für eine drehfeste Verbindung, ist ein Verzahnungseingriff zwischen Außenlamellenträger und Zwischenplatte sowie Anpressplatte vorgesehen, wozu der Außenlamellenträger zweckmäßigerweise eine axial verlaufende, die Plattenbewegung ermöglichende Innenverzahnung und die beiden Platten eine entsprechende Außenverzahnung aufweisen. Dies ermöglicht einerseits einen Drehmomentübertrag, andererseits aber auch die axiale Bewegung des Platten- oder Lamellenverbundes über das hydraulische oder pneumatische Betätigungssystem.

Das Drehmoment wird vom Zweimassenschwungrad in die Trennkupplung eingeleitet, wozu das Zweimassenschwungrad über einen Verzahnungseingriff mit dem Außenlamellenträger lösbar gekoppelt ist. Das heißt, dass im Rahmen der Montage zunächst die Trennkupplung montiert wird und anschließend das Zweimassenschwungrad, das zur Motorseite gehört. Hierzu ist lediglich die Verzahnung am Zweimassenschwungrad, bevorzugt eine Innenverzahnung, ausgebildet an einem entsprechenden Radialflansch, mit einer Außenverzahnung des Außenlamellenträgers, beispielsweise als kombinierte Innen-Außen-Verzahnung, ineinander zu führen. Die Montageschnittstelle befindet sich folglich zwischen dem Zweimassenschwungrad und dem Außenlamellenträger.

Um ungewollte Klappergeräusche in dieser Steck- oder Verzahnungsverbindung zwischen dem Zweimassenschwungrad und dem Außenlamellenträger zu vermeiden, ist erfindungsgemäß vorgesehen, dass die Steckverbindung in Umfangsrichtung unter Verwendung eines oder mehrerer Federelemente vorgespannt ist. Hierüber wird erreicht, dass die Zähne der Verzahnung des Zweimassenschwungrads permanent mit einer Zahnflanke an der benachbarten Zahnflanke der Außenverzahnung des Außenlamellenträgers anliegen, das heißt, dass durch diese Vorspannung das Spiel zwischen den beiden Verzahnungen kompensiert ist. Auf Grund des kontinuierlichen Flankenkontakts kann es im Betrieb, wenn also ein Drehmoment eingeleitet wird oder der Drehmomentübertrag beendet wird, zu keinem Klappergeräusch in diesem Bereich kommen.

Zur Integration der Federelemente ist es erfindungsgemäß ein zwischen eine Außenverzahnung des Außenlamellenträgers und einer Innenverzahnung des Zweimassenschwungrads, die, den Verzahnungseingriff bildend, ineinandergreifen, eingreifendes Spannelement vorzusehen, wobei das oder die Federelemente zwischen dem Spannelement und dem Außenlamellenträger angeordnet sind. Dieses Spannelement greift mit einer oder mehreren Laschen oder Fingern, die sich axial erstrecken, zwischen die beiden ineinandergreifenden Verzahnungen. Es liegt mit der oder den Laschen oder Fingern an der Innenverzahnung des Zweimassenschwungrads an. Das eine oder die mehreren Federelemente sind mit einem Ende an dem Spannelement aufgelagert oder abgestützt. Mit dem anderen Federende sind das oder die Federelemente am Außenlamellenträger aufgelagert respektive abgestützt. Hierbei wird erreicht, dass das Spannelement respektive seine Laschen oder Finger permanent gegen die Innenverzahnung des Zweimassenschwungrads angefedert sind. Es wird damit folglich der Außenlamellenträger in Umfangsrichtung relativ zum Zweimassenschwungrad vorgespannt respektive in entgegengesetzte Richtung gespannt, so dass die permanente Flankenanlage im Verzahnungsbereich gegeben ist.

Das Spannelement ist dabei bevorzugt ringförmig ausgeführt, mit einer ringförmigen Basis, von der aus sich die eine oder die mehreren sich axial erstreckenden Laschen oder dergleichen, die zwischen die Außenverzahnung und die Innenverzahnung greifen, erstrecken.

Erfindungsgemäß weist dabei das Spannelement als Basis einen sich nach innen erstreckenden Radialflansch auf, an dem ein oder mehrere Abstützabschnitte vorgesehen sind, an denen sich das oder die Federelemente mit einem Ende abstützen, wobei am Außenlamellenträger ebenfalls ein oder mehrere Abstützabschnitte vorgesehen sind, an denen sich das oder die Federelemente mit dem anderen Ende abstützen. Mittels dieses Radialflansches, an dem beispielsweise zur Bildung der Abstützabschnitte ein oder mehrere entsprechende Ausnehmungen oder Fenster vorgesehen sind, in die das jeweilige Federelement eingesetzt ist, ist auf einfache Weise die Ausbildung eines oder mehrerer entsprechender Abstützabschnitte möglich. Da auch der Außenlamellenträger bevorzugt einen solchen Radialflansch aufweist, über den er mittels der Niet- oder Schweißverbindungen an der Gegenplatte befestigt ist, liegen folglich im Bereich vor der Gegenplatte zwei Radialflansche benachbart zueinander, so dass in diesem Bereich die Ausbildung der entsprechenden Abstützabschnitte besonders zweckmäßig und effizient ist und das oder die Federelemente auf einfache Weise zur Verspannung integriert werden können.

Als Federelement wird bevorzugt eine Schraubenfeder verwendet, wobei die oder jede Schraubenfeder bevorzugt in Umfangsrichtung angeordnet ist, das heißt, dass die entsprechenden Abstützabschnitte ebenfalls in Umfangsrichtung benachbart angeordnet sind. Das oder die Schraubenfedern wirken folglich aufgrund ihrer Anordnung in Umfangsrichtung tangential, so dass die beiden Elemente entsprechend auseinander gedrückt respektive gespannt werden können.

Wie beschrieben befindet sich die Montageschnittstelle zwischen dem Zweimassenschwungrad respektive dem Radialflansch mit der Verzahnung des Zweimassenschwungrads und dem Außenlamellenträger respektive dessen Außenverzahnung. Im Rahmen der Montage ist die Innenverzahnung des Zweimassenschwungrads in die Außenverzahnung des Außenlamellenträgers einzuführen, das heißt, beide Elemente werden axial aufeinander zu bewegt. Um diese Einführbewegung zu erleichtern und sie auch zu ermöglichen, wenn die beiden Verzahnungen nicht derart bezüglich einander ausgerichtet sind, dass die Zähne in die entsprechenden Zahnlücken eingeführt werden können, ist es zweckmäßig, entsprechende Einführhilfen oder Einführkonturen vorzusehen, die dieses Einführen auch bei leichtem Drehversatz ermöglichen und eine entsprechende Verzahnungsausrichtung herbeiführen. Da, axial gesehen, das Spannelement das vorgelagerte Bauteil ist, ist es gemäß einer zweckmäßigen Weiterbildung der Erfindung vorteilhaft, wenn am Spannelement an der dem Zweimassenschwungrad benachbarten Seite ein oder mehrere Einführkonturen, über die die Innenverzahnung des Zweimassenschwungrads in die Außenverzahnung des Außenlamellenträgers einführbar ist, vorgesehen sind. Eine solche Einführkontur kann beispielsweise trichterartig oder mittels geeigneter Schrägflächen oder dergleichen ausgeführt sein, das heißt, sie weist stets entsprechende Führungsflächen, die sich zum Zweimassenschwungrad hin öffnen, auf. Eine in Umfangsrichtung versetzte Innenverzahnung läuft beim axialen Gegeneinanderschieben folglich gegen die eine oder die mehreren Schrägflächen, läuft entlang dieser und wird hierbei geringfügig in Umfangsrichtung verdreht, so dass sie automatisch korrekt bezüglich der Außenverzahnung ausgerichtet wird.

Das Spannelement ist bevorzugt ein Blechbauteil, an dem einerseits die Laschen oder Vorsprünge auf einfache Weise durch Stanzen und Umformen entsprechend ausgeführt werden können, wie auch der beschrieben Radialflansch. Ebenso können auch die eine oder die mehreren Einführkonturen, beispielsweise die beschriebenen Schrägflächen, hierbei ohne weiteres ausgebildet werden.

Anstelle eines ringförmigen Spannelements ist es auch denkbar, mehrere separate Spannelemente, die einander entweder zur Ringform ergänzen, oder die beispielsweise äquidistant um den Umfang verteilt angeordnet sind, vorzusehen, wobei auch diese mehreren Spannelemente bevorzugt als einfache Blechbauteile ausgeführt sind.

Die Erfindung wird nachfolgend anhand von Ausführungsbeispielen unter Bezugnahme auf die Zeichnungen erläutert. Die Zeichnungen sind schematische Darstellungen und zeigen:
- Figur 1: eine Prinzipdarstellung eines Hybridmoduls einer ersten Ausführungsform,
- Figur 2: eine Prinzipdarstellung eines Hybridmoduls einer zweiten Ausführungsführungsform,
- Figur 3: eine Prinzipdarstellung eines Hybridmoduls einer dritten Ausführungsform,
- Figur 4: eine Prinzipdarstellung eines Hybridmoduls einer vierten Ausführungsform,
- Figur 5: eine Prinzipdarstellung eines Hybridmoduls einer fünften Ausführungsform, und
- Figur 6: eine Prinzipdarstellung eines Hybridmoduls einer sechsten Ausführungsform.

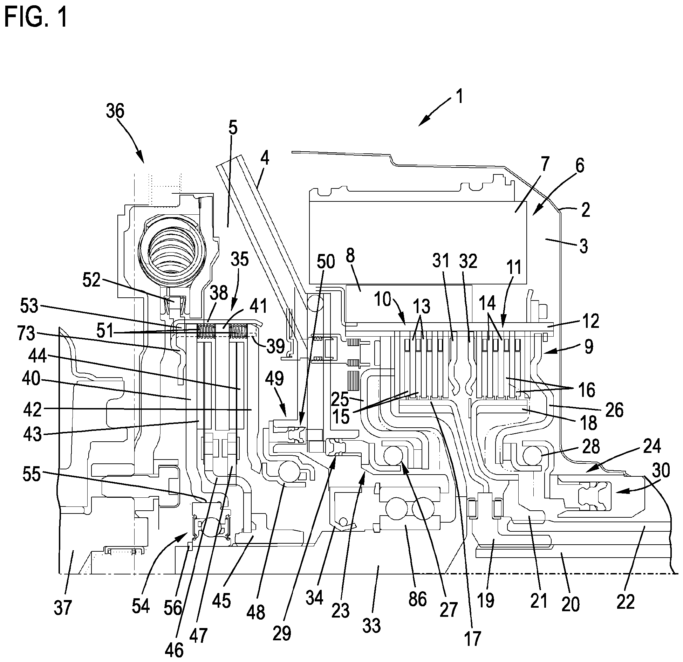

Figur 1 zeigt ein Hybridmodul 1, umfassend ein hier nur angedeutetes Gehäuse 2, in dem ein Nassraum 3 vorgesehen ist, der über eine Trennwand 4 von einem Trockenraum 5 getrennt ist, wobei die Zwischenwand 4 zum Gehäuse 3 natürlich entsprechend geschlossen respektive abgedichtet ist. Im Trockenraum 3 befindet sich eine Elektromaschine 6 mit einem Stator 7 und einem Rotor 8 sowie eine Kupplungsvorrichtung 9 umfassend eine erste Teilkupplung 10, üblicherweise K1 genannt, sowie eine zweite Teilkupplung 11, üblicherweise K2 genannt. Die beiden Teilkupplungen 10, 11 weisen einen gemeinsamen Außenlamellenträger 12 auf, der fest mit dem Rotor 8 verbunden ist. Am Außenlamellenträger 12 sind erste und zweite Lamellen 13, 14 über einen entsprechenden Verzahnungseingriff axial beweglich geführt, wozu der Außenlamellenträger 12 eine Innenverzahnung und die Lamellen 13, 14 eine Außen-verzahnung aufweisen. Zwischen die Lamellen 13, 14, die auch als Außenlamellen bezeichnet werden können, greifen weiterer Lamellen 15, 16, die auch als Innenlamellen bezeichnet werden können, ein. Die ersten Innenlamellen 15 sind an einem Innenlamellenträger 17, der eine Außenverzahnung aufweist, in die die Innenlamellen 15 mit einer Innenverzahnung eingreifen, axial beweglich geführt. Die zweiten Innenlamellen 16 greifen mit einer entsprechenden Innenverzahnung in die Außenverzahnung eines zweiten Innenlamellenträgers 18 ein und sind auch dort axial beweglich geführt. Der erste Innenlamellenträger 17 ist über eine Nabe 19 mit einer ersten, zum Getriebe führenden Abtriebswelle 20 verbunden, der zweite Innenlamellenträger 18 ist über eine Nabe 21 mit einer zweiten, ebenfalls zum Getriebe führenden Abtriebswelle 22 verbunden.

Zum Betätigen der Teilkupplungen 10, 11 sind separate Betätigungssysteme 23, 24 vorgesehen, die jeweils einen Drucktopf 25, 26 aufweisen, der über ein entsprechendes Lager 27, 28 relativ zu einer positionsfesten Kolben-Zylinder-Anordnung 29, 30 drehgelagert ist. Über die Kolben-Zylinder-Anordnung 29, 30 kann der jeweilige Drucktopf 25, 26 axial bewegt werden. Er drückt dabei das entsprechende Lamellenpaket bestehend aus den Außen- und Innenlamellen 13, 15 respektive 14, 16 gegen ein jeweiliges Widerlager 31, 32, worüber das jeweilige Lamellenpaket geschlossen wird. Bei geschlossenem Lamellenpaket bildet sich ein Reibschluss innerhalb der einzelnen Teilkupplungen 10, 11 aus, so dass ein am Außenlamellenträger 12 anliegendes Drehmoment auf den jeweiligen Innenlamellenträger 17, 18 und von diesem auf die jeweilige Abtriebswelle 20, 22 übertragen werden kann.

Es handelt sich bei dem in Figur 1 gezeigten Beispiel entsprechendes gilt für sämtliche folgenden Beispiele also um eine Doppelkupplung, die in die Elektromaschine 6 integriert ist.

Der Außenlamellenträger 12 ist fest mit einer Zwischenwelle 33 verbunden, die über ein Lager 34 drehfest bezüglich der Zwischenwand 4 respektive der allgemeinen Gehäuseanordnung gelagert ist. Die Zwischenwand 4 ist über ein entsprechendes Dichtelement 34 zur Zwischenwelle 33 hin abgedichtet. Mit der Zwischenwelle 33 ist eine Trennkupplung 35 gekoppelt, die wiederum mit einem Zweimassenschwungrad 36 gekoppelt ist, das seinerseits mit einem Kurbelwellenflansch 37 verbunden ist.

Der Kuppelwellenflansch 37 seinerseits ist mit dem Verbrennungsmotor verbunden, wird also über diesen angetrieben. Die Trennkupplung 35, die auch als K0-Kupplung bezeichnet werden kann, dient dazu, bedarfsweise den Verbrennungsmotor anzukoppeln, um ein über den Verbrennungsmotor geliefertes Drehmoment über die Zwischenwelle 33 zum Rotor 8 und damit zum Außenlamellenträger 12 zu übertragen, so dass das Drehmoment wahlweise über die erste oder zweite Teilkupplung 10, 11 an die jeweils gekoppelte Abtriebswelle 20, 22 übertragen werden kann.

Die Trennkupplung 35 weist einen Außenlamellenträger 38 auf, der eine sich axial erstreckende Innenverzahnung aufweist. Diese Innenverzahnung bildet gleichzeitig auch eine Außenverzahnung, die sich ebenfalls axial erstreckt, aus. Durch den gestrichelten Abschnitt 39 ist die kombinierte Innen- Außenverzahnung dargestellt.

Des Weiteren umfasst die Trennkupplung 35 eine Gegenplatte 40, die axial gesehen positionsfest ist und die fest mit dem Außenlamellenträger 38, der einen entsprechenden Radialflansch 73 aufweist, in diesem Bereich verbunden ist. Dies kann beispielsweise durch Niet- oder Schweißverbindungen erfolgen.

Vorgesehen ist des Weiteren eine Zwischenplatte 41 sowie ein Anpressplatte 42, die über entsprechende Außenverzahnungen in die Innenverzahnung des Außenlamellenträgers 38 eingreifen und hierüber drehfest, jedoch axial bewegbar geführt sind. Zwischen die Gegenplatte 40 und die Zwischenplatte 41 respektive die Zwischenplatte 41 und die Anpressplatte 42 greift jeweils eine Kupplungsscheibe 43, 44, die beide drehfest über eine entsprechende Nabe 45 mit der Zwischenwelle 33 verbunden sind. Die Kupplungsscheibe 43 ist über einen gebogenen Verbindungsflansch 46 mit der Nabe 45 verbunden, die Kupplungsscheibe 44 ist über eine Mitnehmerscheibe 47 mit dem Verbindungsflansch 46 verbunden. Die Nabe 45 ist, da die Kupplungsscheiben 43, 44 axial bewegbar sein müssen, auf der Zwischenwelle 33, die außenverzahnt ist und mit der die Nabe 45 über eine entsprechende Innenverzahnung drehfest verbunden ist, axial beweglich geführt.

Die Anpressplatte 42 ist über ein Lager 48 relativ zur Zwischenwand 4 drehgelagert. Das Lager 48 ist wiederum Teil eines Betätigungssystems 49, das ebenfalls eine Kolben-Zylinder-Einheit 50 umfasst, die wie auch die anderen bereits beschriebenen Kolben- Zylinder-Einheiten hydraulisch oder pneumatisch betätigt werden kann. Über den beweglichen Kolben kann das Lager 48 axial bewegt werden und mit ihm die Anpressplatte 42, so dass diese axial verschoben wird und dabei die Kupplungsscheiben 43, 44 respektive die Zwischenplatte 41 axial mitnimmt und so dieses Lamellenpaket in Reibschluss bringt. Diese Verschiebebewegung erfolgt gegen die Rückstellkraft mehrerer Federelemente 51, die zwischen der Gegenplatte 40 und der Zwischenplatte 41 respektive der Zwischenplatte 41 und der Anpressplatte 42 im Bereich der Innenverzahnung des Außenlamellenträgers 38 angeordnet sind. Es können mehrere separate einzelne Federelemente 51 um den jeweiligen Umfang verteilt positioniert sein, aber auch entsprechende, zu einer Ringform gekoppelte Federpakete.

Zur Kopplung des Zweimassenschwungrades 36 weist dieser einen Radialflansch 52 auf, der eine Innenverzahnung 53 aufweist, die mit der Außenverzahnung des Außenlamellenträgers 38 kämmt, also in diese eingreift. Hierüber kann folglich ein von der Verbrennungsmaschine über den Kuppelwellenflansch 37 an das Zweimassenschwungrad 36 übertragenes Drehmoment vom Zweimassenschwungrad 36 auf den Außenlamellenträger 38 und über diesen respektive die Trennkupplung 35 selbst an die Zwischenwelle 33 übertragen werden und von dieser über die Doppelkupplung an die entsprechende Abtriebswelle 20, 22. Die zentrale Baugruppe ist die Trennkupplung 35 sowie deren Kopplung zum Zweimassenschwungrad. Die Kupplungsscheiben 43, 44 können jeweils zur Drehmomentübertragung reibschlüssig zwischen ihren Nachbarbauteilen, also den jeweiligen Platten 40, 41, 42 bei Betätigung des Betätigungssystems 49 eingeklemmt werden. Die beiden Kupplungsscheiben 43, 44 sind axial verlagerbar, jedoch drehfest mit der Zwischenwelle 33 verbunden. Die axial feststehende Gegenplatte 40, die axial begrenzt verlagerbare Zwischenplatte 41 und die axial begrenzt verlagerbare Anpressplatte 42 sind drehfest mit dem Zweimassenschwungrad 36 verbunden. Um die Trennkupplung 35 zu schließen und Drehmoment zu übertragen, schiebt das mit der Trennkupplung 35 verbundene Betätigungssystem 49 die Anpressplatte 42 gegen die erste Kupplungsscheibe 44. Die erste Kupplungsscheibe 44 legt sich dann an die Zwischenplatte 41 an, so dass daraufhin die Anpressplatte 42, die Kupplungsscheibe 44 und die Zwischenplatte 41 axial verschoben werden, bis die Zwischenplatte 41 auf die weitere Kupplungsscheibe 43 trifft und diese gegen die axial feststehende Gegenplatte 40 drückt. Je stärker die vom Betätigungssystem 49 auf die Trennkupplung 35 ausgeübte Kraft ist, desto stärker werden die Reibflächen zwischen den Platten respektive Scheiben zusammengepresst und desto größer ist das in der Trennkupplung übertragbare Drehmoment.

Damit die Betätigungskräfte nicht auf die Kurbelwelle des Verbrennungsmotors übertragen werden, ist die Gegenlagerplatte 40 über ein Lager 54 auf der Zwischenwelle 33 abgestützt. Dieses Lager 54 leitet die axialen Betätigungskräfte in die Zwischenwelle 33 ein, sorgt aber auch für die Zentrierung, Abstützung und Positionierung der Trennkupplung 35. Zweckmäßigerweise wird dieses Lager 54 als Schrägkugellager oder Rillenkugellager ausgeführt. Bei dem gezeigten Ausführungsbeispiel ist das Lager 54 in einen an der Gegenplatte 40 ausgeformten Lagersitz 55 eingepresst, der einen radialen und axialen Formschluss sicherstellt. Wenn die Trennkupplung 35 auf der Zwischenwelle 33 montiert wird, wird das Lager 54 auf die Zwischenwelle 33 aufgeschoben und anschließend gegen eine ungewollte axiale Verlagerung gesichert. Bei dem gezeigten Ausführungsbeispiel erfolgt dies durch einen Wellensicherungsring 56, der in eine entsprechende Nut an der Zwischenwelle 33 eingesetzt ist. Alternativ ist es auch möglich weitere Bauteile zwischen der Gegenlagerplatte 40 und dem Lager 54 und/oder zwischen dem Lager 54 und der Zwischenwelle 33 einzusetzen. Um die Belastbarkeit des Lagers 54, das die Trennkupplung 35 auf der Zwischenwelle 33 abstützt, zu steigern, kann es sinnvoll sein, den Lagerdurchmesser deutlich größer zu wählen, als den Durchmesser der Zwischenwelle 33. Dann ist es besonders zweckmäßig, zwischen dem Lager 54 und der Zwischenwelle 33 ein beispielsweise hülsenförmiges Bauteil anzuordnen, das den radialen Abstand zwischen den beiden Komponenten ausgleicht und die axiale und radiale Kraftübertragung sowie die Positionierung sicherstellt.

Die Gegenplatte 40, die Zwischenplatte 41 (von der natürlich auch mehrere vorgesehen sein können, was dann zur Folge hat, dass auch mehrere Kupplungsscheiben vorzusehen sind) und die Anpressplatte 42 sind durch den Außenlamellenträger 38 miteinander verbunden. Dieser ist wie beschrieben fest mit der Gegenplatte 40 beispielsweise durch Verschweißen oder Vernieten verbunden. Die Zwischenplatte 41 und die Anpressplatte 42 sind axial relativ zum Außenlamellenträger 38 bewegbar, von diesem aber formschlüssig radial und in Umfangsrichtung gehalten. Der Außenlamellenträger 38 sorgt somit dafür, dass die Zwischenplatte 41 und die Anpressplatte 42 innerhalb ihres gewünschten Bewegungsbereichs verbleiben. Zusätzlich sorgt der Außenlamellenträger für die Drehmomentübertragung zwischen der Anpressplatte 42, der Zwischenplatte 41, der Gegenplatte 40 und dem Zweimassenschwungrad 36. Wie beschrieben ist er zweckmäßigerweise mit einer in axialer Richtung verlaufenden und in Umfangsrichtung sich wiederholenden Zahnkontur, der beschriebenen kombinierten Innen-Außen-Verzahnung, ausgestattet. In diese Zahnkontur greifen bei dem beschriebenen Ausführungsbeispiel die Anpressplatte 42, die Zwischenplatte 41, gegebenenfalls auch die Gegenplatte 40 sowie der Radialflansch 52 des Zweimassenschwungrades mit jeweils eigenen Zahnkonturen ein.

Um das sichere Öffnen der Trennkupplung 35 nach Entlastung seitens des Betätigungssystems 49 zu unterstützen, sind bei dem Ausführungsbeispiel die Federelemente 51, hier Schraubendruckfedern, zwischen der Gegenplatte 40 und der Zwischenplatte 41 sowie der Zwischenplatte 41 und der Anpressplatte 42 vorgesehen. Diese Federelemente 51 drücken die Zwischenplatte 41 und die Anpressplatte 42 zurück in ihre Offenposition, wenn der Druck des Druckmediums in der Kolben-Zylinder-Einheit 50 weit genug abgesunken ist. Dabei schieben die Federelemente 51 auch den Kolben der Kolben-Zylinder-Einheit 50 wieder zurück in dessen Ausgangsposition. Die Trennkupplung 35 kann mit umlaufenden Federelementen 51 oder mit mehreren um den Umfang angeordneten Federelementen 51 ausgestattet sein, wobei die Federelemente 51 dabei von den beteiligten Platten und/oder dem Lamellenträger 38 in Position gehalten werden.

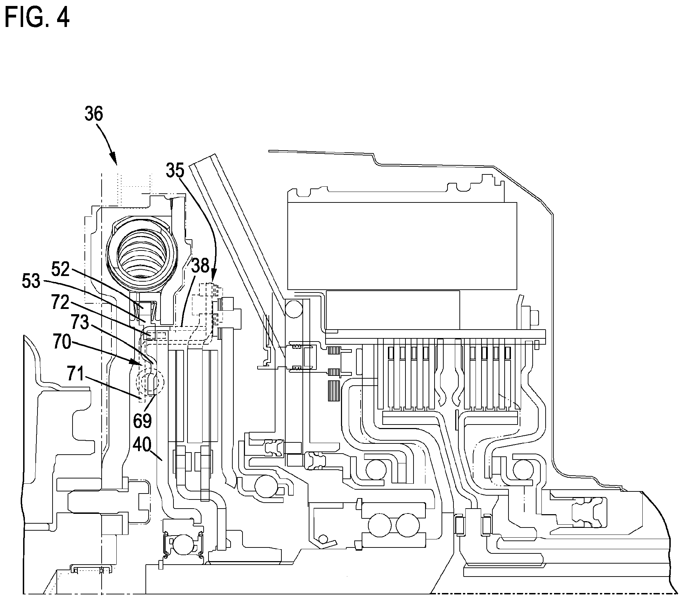

Für die Montage von Verbrennungsmotor und Getriebe ist hier die Montageschnittstelle zwischen diese beiden Aggregate gelegt, konkret zwischen das Zweimassenschwungrad 36 und die Trennkupplung 35. Das Zweimassenschwungrad 36 wird an dem Kurbelwellenflansch 37 verschraubt und ist somit für den Montageablauf ein Teil des Verbrennungsmotors. Die Trennkupplung 35 wird auf der Zwischenwelle 33 befestigt, die an der mit dem Gehäuse 2 verbundenen Stützwand 4 gelagert ist. Dadurch ist die Trennkupplung 35 für den Montageablauf ein Teil des Getriebes. Beim Zusammenschieben von Verbrennungsmotor und Getriebe während der Montage wird auch eine Steckverbindung umfassend die Verzahnung 53 des Zweimassenschwungrads 36 und der Außenverzahnung des Außenlamellenträgers 38 der Trennkupplung 35 zusammengefügt. Über diese Zahnkonturen oder anders ausgeführte axialfügbare Verbindungsgeometrien wird nach der Montage das Drehmoment zwischen dem Zweimassenschwungrad 36 und der Trennkupplung 35 übertragen. Um den Platzbedarf für diese Steck- oder Verzahnungsverbindung so gering wie möglich zu halten, wird bei dem gezeigten Ausführungsbeispiel der Radialflansch 52 mit einer Innenverzahnung versehen, die in die verzahnte Außenkontur, also die Außenverzahnung des Lamellenträgers 38 eingreift, wobei, wie Figur 1 zeigt, die Teilkupplung 35 hierzu zumindest teilweise in das Zweimassenschwungrad 36 eingeschoben ist. Um ungewollte Klappergeräusche innerhalb dieser Steck- oder Verzahnungsverbindung zwischen dem Zweimassenschwungrad 36 und der Trennkupplung 35 zu vermeiden, kann die Steck- oder Verzahnungsverbindung in Umfangsrichtung vorgespannt werden. Eine solche Vorspannmöglichkeit wird nachfolgend in Bezug auf Figur 4 beschrieben. Grundsätzlich kann hierzu ein gegenüber dem Lamellenträger 38 verdrehbares Spannbauteil verwendet werden, das radial außen in dem Bereich der Steck- oder Verzahnungsverbindung eingreift und das durch tangential wirkende Federn in Umfangsrichtung verspannt ist. Die Verzahnung 53 des Radialflansches 52 kann somit zwischen den Zahnflanken der Außenverzahnung des Außenlamellenträgers 38, an denen sich die Zähne der Verzahnung 53 in der einen Umfangsrichtung anlegen und den Fingern oder Fortsätzen des Spannbauteils, die in diesen Bereich eingreifen, und die Flanschverzahnung 53 gegen die eben erwähnten Flanken des Außenlamellenträgers 38 drücken, eingeklemmt werden. Die Verzahnung 53 des Radialflansches 52 wird bei der Montage von Verbrennungsmotor und Getriebe zwischen oder in die Gegenkonturen von Außenlamellenträger 38 und Spannbauteil geschoben.

Die beiden Kupplungsscheiben 43, 44 der Trennkupplung 35 sind relativ zueinander, also relativ zur Zwischenwelle 33, axial begrenzt verlagerbar, wie beschrieben. Sie sind aber untereinander wie auch relativ zur Zwischenwelle 33 nicht verdrehbar. Bei dem Beispiel gemäß Figur 1 ist die Kupplungsscheibe 43 mit einer innenseitig verzahnten Nabe 45 an der außen verzahnten Zwischenwelle 33 befestigt. Die weitere Kupplungsscheibe 44 ist durch eine Innenverzahnung oder mit nach innen ragenden Fortsätzen mit einer Zahnkontur oder stegartige Verbindungskonturen mit der Kupplungsscheibe 43 respektive dem Verbindungsflansch 46 verbunden.

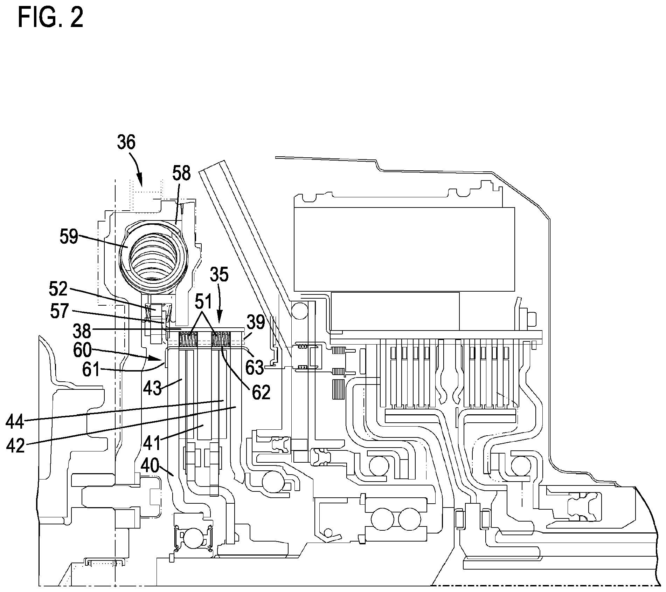

In den nachfolgend beschriebenen Figuren 2 6 ist der grundsätzliche Aufbau des Hybridmoduls, was einerseits die Integration der Elektromaschine 6 sowie die Integration, den Aufbau und die Funktion der Kupplungsvorrichtung 9 wie auch die entsprechende Kopplung des Zweimassenschwungrades 36 zum Verbrennungsmotor etc. angeht, der gleiche wie vorstehend zu Figur 1 beschrieben, weshalb auf die diesbezüglichen Ausführungen verwiesen wird. Unterschiedlich ist jedoch jeweils der Aufbau und die Funktionsweise der jeweiligen Trennkupplung 35 sowie deren Kopplung zum Zweimassenschwungrad 36. Aus diesem Grund wird zu den nachfolgenden Figuren lediglich dieser Teil des jeweiligen Hybridmoduls 1 beschrieben, wobei sofern möglich für gleiche Bauteile gleiche Bezugszeichen verwendet werden.

Bei dem in Figur 2 dargestellten Ausführungsbeispiel der Trennkupplung 35 ist der Aufbau der Trennkupplung grundsätzlich vergleichbar mit dem Aufbau, wie in Figur 1 beschrieben. Anders ist hier jedoch die Befestigung des Außenlamellenträgers 38, ebenso wie die Möglichkeit der Integration eines Ausrichtelements dargestellt ist.

Bei dem in Figur 2 gezeigten Ausführungsbeispiel ist der Lamellenträger 38, der auch hier eine über den gestrichelten Abschnitt 39 angedeutete Innenverzahnung respektive kombinierte Innen-Außen-Verzahnung aufweist, fest mit einem Radialflansch 52 des Zweimassenschwungrads verbunden. Der Außenlamellenträger 38 verbindet auch hier die Lamellen der Trennkupplung 35, also die Gegenplatte 40, die Zwischenplatte 41 und die Anpressplatte 42, drehfest miteinander, die auch hier über entsprechende Außenverzahnungen in die Innenverzahnung des Außenlamellenträgers 38 eingreifen. Anders als bei dem vorstehend beschriebenen Beispiel greift hier zwingend auch die Gegenplatte 40 mit einer Außenverzahnung in die Innenverzahnung des Außenlamellenträgers 38 ein, nachdem dieser fest respektive unlösbar mit dem Zweimassenschwungrad 36 gekoppelt ist. Das heißt, dass die gesamte Lamellenanordnung lösbar vom Außenlamellenträger 38 ist, mithin also hier die Montageschnittstelle zwischen dem Außenlamellenträger 38 und dem Lamellenpaket gegeben ist.

Zur Befestigung des Außenlamellenträgers 38 am Radialflansch 52 ist auf der dem Zweimassenschwungrad 36 zugewandten Seite des verzahnten Ringkörpers des Außenlamellenträgers 38 ein sich radial nach außen erstreckender Flansch 57 vorgesehen respektive angeformt. Dieser Flansch 57 ist mit dem Radialflansch 52 vernietet oder verschweißt. Um die Trennkupplung 35 axial möglichst nahe an die Primärseite des Zweimassenschwungrads 36 und radial möglichst nahe an den Bogenfederkanal 58, in dem die Bogenfedern 59 aufgenommen und geführt sind, anordnen zu können, wird die Verbindung zwischen dem Flansch 57 und dem Radialflansch 52 ganz oder teilweise zwischen den angefederten Reibelementen des Zweimassenschwungrads 36 angeordnet. Somit ergeben sich mindestens für ein Reibelement die folgenden Geometrieverhältnisse. Der äußere Flanschdurchmesser des Flansches 57 des Außenlamellenträgers 38 ist somit größer als der Innendurchmesser des Reibelements. Der Innendurchmesser des Reibelements ist jedoch größer als der Außendurchmesser des verzahnten Ringkörpers des Lamellenträgers 38. Die Bogenfeder, die das Reibelement an seinen Reibpartner, z. B. den Deckel des Zweimassenschwungrads, andrückt, kann sich dabei am Außenlamellenträger 38 oder an den Verbindungsmitteln wie beispielsweise einer Niete, über die der Außenlamellenträger 38 am Radialflansch 52 befestigt ist, abstützen.

Da der Außenlamellenträger 38 fest mit dem Zweimassenschwungrad 36 verbunden ist, verläuft die Montageschnittstelle zwischen dem Verbrennungsmotor und dem Getriebe zwischen dem Außenlamellenträger 38, der hier Teil des Verbrennungsmotors ist, und den restlichen Trennkupplungsteilen, also im Wesentlichen der Gegenplatte 40, der Zwischenplatte 41 und der Anpressplatte 42, die Teil des Getriebes sind. Damit während der Montage des Verbrennungsmotors mit dem Getriebe die Zahnkontur, also die Innenverzahnung des Außenlamellenträgers 38 in die Außenverzahnungen respektive Zahnkonturen der Gegenplatte 40, der Zwischenplatte 41 und der Anpressplatte 42 eingeschoben werden kann, ist im gezeigten Beispiel ein Ausrichtelement 60 vorgesehen, das die Zahnkonturen der drei verzahnten Platten 40, 41, 42 der Trennkupplung 35 in der richtigen Umfangsposition hält. Dadurch ist sichergestellt, dass alle drei Zahnkonturen der Platten 40, 41, 42, in die die Außenverzahnung des Außenlamellenträgers 38 eingeschoben werden muss, miteinander axial fluchten. Das Ausrichtelement 60 sorgt nicht nur dafür, dass sich die Platten 40, 41, 42 nicht gegeneinander verdrehen können, sondern es sorgt auch dafür, dass die Bauteile der Trennkupplung 35, einschließlich der Kupplungsscheiben 43, 44 sowie deren Anbindungsbauteile an die Zwischenwelle 33, bereits ohne Außenlamellenträger 38 einen stabilen Unterzusammenbau, also eine stabile Baugruppe bilden. Das Ausrichtelement 60 dient somit auch als Transportsicherung oder Verliersicherung für die Trennkupplung 35. Durch das Ausrichtelement 60 werden insbesondere die Gegenplatte 40, die Zwischenplatte 41, die Anpressplatte 42 und die beiden Kupplungsscheiben 43, 44 zusammengehalten. Die Federelemente 51, die die Platten 40, 41, 42 der Trennkupplung 35 in ihre Offenposition zurückdrücken, werden an den Platten befestigt oder auch von dem Ausrichtelement, von denen natürlich auch um den Umfang verteilt mehrere vorgesehen sein können, in ihrer Position gehalten.

Bei dem in Figur 2 gezeigten Ausführungsbeispiel ist das Ausrichtelement 60 als ein ringförmiges Bauteil vorgesehen, das an der Gegenplatte 40 mit einem Radialflansch 61 befestigt ist, und das sich axial erstreckende, längliche fingerartige Fortsätze 62 aufweist, die durch die Zahnlücken der Trennkupplungsplatten 40, 41, 42 hindurch bis zur Rückseite der Anpressplatte 42 reichen. Hinter der Anpressplatte 42 werden die Fortsätze 62 umgebogen, weisen also einen radial nach innen gebogenen Rand 63 auf, der die Anpressplatte 42 hintergreift. Dieses Umbiegen erfolgt, wenn alle Bauteile einschließlich der Anpressplatte 42 in das Ausrichtelement 60 eingelegt wurden. Über diesen Hintergriff wird sichergestellt, dass die Bauteile nicht mehr herausfallen können. Das Ausrichtelement 60 stellt somit eine Art Ersatzlamellenträger dar, der von der Trennkupplungsmontage, wenn also die Trennkupplung als Unterbaugruppe montiert wird, bis zur Montage des Verbrennungsmotors mit dem Getriebe alle Aufgaben des noch nicht vorhandenen Außenlamellenträgers 38 übernimmt. Da die Fortsätze 60 des Ausrichtelements nahe des Fußkreises in den Zahnlücken der Verzahnungen der Platten 40, 41, 42 entlanglaufen, deckt das Ausrichtelement 60 den Hauptteil der Zahnflanken der Platten 40, 41, 42 nicht ab. Wenn der Außenlamellenträger 38 in die Zahnlücken der Platten 40, 41, 42 eingeschoben wird, können sich somit die Zahnflanken der Platten 40, 41, 42 direkt an den Zahnflanken der Innenverzahnung des Außenlamellenträgers 38 anlegen. Dies wird auch dadurch ermöglicht, dass bevorzugt die Platten 40, 41, 42 im Ausrichtelement 60 etwas mehr Spiel in Umfangsrichtung haben, als in der Außenverzahnung des Lamellenträgers 38. Dadurch ist sichergestellt, dass die Drehmomentübertragung von den Platten 40, 41, 42 direkt auf den Außenlamellenträger 38 erfolgt, ohne dass das Ausrichtelement 60 im Betrieb der Trennkupplung 35 Umfangskräfte übertragen muss. Das Ausrichtelement 60 hat somit, was die Ausrichtung und Führung der Platten angeht, im Betrieb der Trennkupplung 35 keine Funktion mehr. Es behindert daher auch nicht die axiale Verlagerung der Platten 40, 41, 42 respektive der Kupplungsscheiben 43, 44. Werden, was möglich ist, die in der Trennkupplung 35 verbauten Federelemente 51 über das Ausrichtelement 60 positioniert, so kann das Ausrichtelement 60 diese Funktion über die gesamte Kupplungslebensdauer erfüllen.

Das Ausrichtelement 60 wird bevorzugt als Blechteil ausgeführt, also als einfaches Stanz- und Tiefziehbauteil. Alternativ zu einem ringförmigen Ausrichtelement 60 können auch mehrere separate, um den Umfang angeordnete Ausrichtelemente verwendet werden. Das Ausrichtelement 60 kann auf der dem Verbrennungsmotor zugewandten Seite der Gegenplatte 40 auch ein oder mehrere Konturelemente oder Einführkonturen aufweisen, die das Einführen der Außenverzahnung des Außenlamellenträgers 38 in die Zahnlücken der Gegenlagerplatte 40, und damit aber auch der axial fluchtenden Verzahnungen der Zwischenplatte 41 und der Anpressplatte 42 erleichtert. Diese Einführkonturen können insbesondere in radialer und/oder tangentialer Richtung abgeschrägte Flächen sein, die um die Zahnlücken der Gegenplattenverzahnung angeordnet sind. Diese Flächen wirken quasi wie ein Trichter, mit der Funktion, dass die Außenverzahnung des Außenlamellenträgers 38, der sich der Trennkupplung 35 in einer axialen Bewegungsrichtung nähert, jedoch nicht exakt auf die Zahnlücken ausgerichtet ist, an den schrägen Flächen entlanggleiten kann, bis die Zähne der Außenverzahnung des Außenlamellenträgers 38 vor den Zahnlücken der Gegenplatte 40 stehen und so axial in die Trennkupplung 35 eingeschoben werden können.

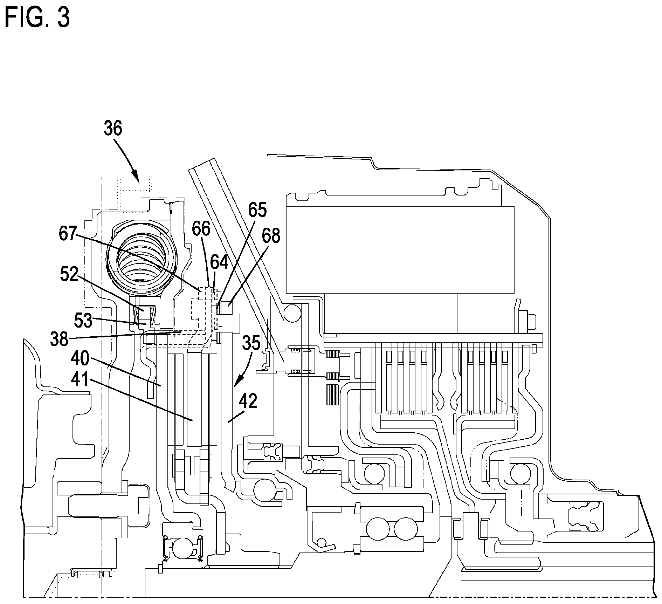

Alternativ zu dem in Figur 2 ausgeführten Ausführungsbeispiel ist es denkbar, zusätzlich zu dem Außenlamellenträger 38 einen ringförmigen Verbindungsträger vorzusehen, der mit dem Außenlamellenträger drehfest, jedoch lösbar verbunden ist. In diesem Fall wäre der mit einer Innenverzahnung versehene Verbindungsträger fest am Radialflansch 52 des Zweimassenschwungrads 36 zu befestigen, ähnlich wie der Außenlamellenträger 38 gemäß Figur 3. Der Außenlamellenträger 38 wäre bei dieser Alternativausführung dann aber Teil der Trennkupplung 35, ähnlich wie in Figur 1 beschrieben, und fest mit der Gegenlagerplatte 40 verbunden. Im Rahmen der Montage würde dann der fest mit dem Zweimassenschwungrad verbundene Verbindungsträger (ähnlich wie in Figur 2) axial in die Außenverzahnung des Außenlamellenträgers 38, der ähnlich wie in Figur 1 fest an der Gegenplatte 40 der Trennkupplung 35 angeordnet ist, einzuschieben. Der fest mit dem Zweimassenschwungrad 36 verbundene Verbindungsträger überträgt dann das Drehmoment des Motors auf den fest mit der Gegenplatte 40 verbundenen Außenlamellenträger 38, der dann das Drehmoment an die Platten 40, 41, 42 der Trennkupplung 35 weiterleitet.

Der Verbindungsträger weist, ebenso wie der Außenlamellenträger 38, einen näherungsweise runden Bereich auf, der radial innen und radial außen eine axial verlaufende und sich in Umfangsrichtung wiederholende Zahnkontur aufweist. Wie auch der Außenlamellenträger 38 kann der Verbindungsträger bevorzugt als Blechteil ausgeführt werden, dessen Materialstärke im Bereich der Verzahnung klein ist in Relation zur Größe der Zähne, wie auch beim Außenlamellenträger 38. Dadurch folgt das Material in Umfangsrichtung einer Mäanderform, um die kombinierte Innen- und Außenverzahnung ausbilden zu können. Auch hier gilt wie auch für alle beschriebenen Ausführungsbeispiele , dass grundsätzlich alle dem Reibschluss innerhalb der Trennkupplung 35 dienenden Bauteile, also die Platten 40, 41, 42 sowie die Kupplungsscheiben 43, 44, als Lamellen bezeichnet werden können. Die Trennkupplung 35 kann alternativ auch mit mehr als den hier gezeigten vier Reibflächen oder Reibebenen ausgeführt werden, indem wie bereits beschrieben mehrere Zwischenplatten 41 und zusätzliche Kupplungsscheiben integriert werden, ähnlich wie dies bei den Teilkupplungen 10, 11 der Kupplungsvorrichtung 9 der Fall ist.

Das in Figur 3 gezeigte Ausführungsbeispiel ist dem aus Figur 1 ähnlich. Das heißt, dass auch hier der Außenlamellenträger 38 fest mit der Gegenplatte 40 der Trennkupplung 35 verbunden ist. Die Außenverzahnung des Außenlamellenträgers 38 bildet die Montageschnittstelle und Drehmomentübertragungsschnittstelle zum Radialflansch 52 des Zweimassenschwungrads 36, wobei der Radialflansch 52 auch hier über eine Innenverzahnung 53 in die Außenverzahnung des Außenlamellenträgers 38 eingreift. Die in Figur 3 gezeigte Ausführung der Trennkupplung 35 zeichnet sich dadurch aus, dass neben dem fest mit der Gegenplatte 40 verbundenen Außenlamellenträger 38, relativ zu dem die Anpressplatte 42 und die Zwischenplatte 41 axial bewegbar sind, die Anpressplatte 42 und/oder die Zwischenplatte 41 über wenigstens eine Blattfeder mit dem Außenlamellenträger 38 oder der Gegenplatte 40 drehfest verbunden sind. Im in Figur 3 gezeigten Beispiel ist sowohl die Zwischenplatte 41 als auch die Anpressplatte 42 über entsprechende Blattfedern 64 (betreffend die Zwischenplatte 41) bzw. 65 (betreffend die Anpressplatte 42) mit dem Außenlamellenträger 38 verbunden. Dazu weist der Außenlamellenträger 38 auf seiner dem Getriebe zugewandten Seite einen umlaufenden, sich radial nach außen erstreckenden Radialflansch 66 auf. Alternativ kann der Außenlamellenträger 38 auch auf seiner dem Getriebe zugewandten Seite mehrere um den Umfang verteilte, sich nach radial außen erstreckende Laschen aufweisen. Dieser Radialflansch 66 oder die Laschen dienen zur Befestigung der Blattfedern 64, 65, die die Zwischenplatte 41 und die Anpressplatte 42 abstützen. Zweckmäßigerweise wird sowohl die Zwischenplatte 41 als auch die Anpressplatte 42 an drei auf dem Umfang verteilten Stellen über die Blattfedern 64, 65 gehalten. Die Blattfedern zentrieren dabei die jeweiligen Platten 41, 42, sorgen für die Drehmomentübertragung und ermöglichen die axiale Verlagerung der Platten.

Es ist möglich, die Zwischenplatte 41 und die Anpressplatte 42 jeweils über separate Blattfedern 64, 65 mit dem Außenlamellenträger 38 zu verbinden, wie in Figur 3 gezeigt. Alternativ oder zusätzlich können auch Blattfedern eingesetzt werden, die mit dem Lamellenträger 38, der Zwischenplatte 41 und der Anpressplatte 42 in Verbindung stehen, die also die drei Bauteile gemeinsam koppeln.

An der Zwischenplatte 41 und der Anpressplatte 42 sind radial ebenfalls mehrere um den Umfang verteilte Fortsätze 67 (an der Zwischenplatte 41) bzw. 68 (an der Anpressplatte 42) vorgesehen, an denen die Blattfedern 64, 65 befestigt werden. Damit diese Fortsätze 67 nicht mit dem Lamellenträger 38 kollidieren, weist dieser sich axial erstreckende Ausnehmungen auf, ist also lokal längsgeschlitzt, damit die Fortsätze zumindest der Zwischenplatte 41, gegebenenfalls auch die Fortsätze der Anpressplatte 42 in diese Ausnehmungen oder Schlitze eingeführt werden können, wenn das Lamellenpaket axial zusammengedrückt wird. Die Seite des Außenlamellenträgers 38, an dem die Blattfedern 64, 65 befestigt sind, hat somit die gleiche Aufgabe wie ein Kupplungsdeckel bei den meisten handelsüblichen Kupplungen. Der in Figur 3 gezeigte Lamellenträger kann somit auch durch einen die Lamellenträgerfunktion erfüllenden Mitnehmerkranz und einen Kupplungsdeckel ersetzt werden. Der Mitnehmerkranz dient als Verbindungsschnittstelle zum Zweimassenschwungrad und der Kupplungsdeckel stützt die Blattfedern ab, die die Platten der Trennkupplung halten.

Alternativ besteht auch die Möglichkeit, dass die Gegenplatte 40 radial außenliegende Fortsätze aufweist, an denen die Blattfedern befestigt werden. Dazu kann die Gegenplatte 40 mit einem sich radial über der neben ihr angeordneten Kupplungsscheibe 43 in Richtung des Getriebes erstreckenden Kragen ausgestattet werden, an den sich in radialer Richtung ein umlaufender Radialflansch oder mehrere sich radial erstreckende Laschen für die Blattfederbefestigung anschließen.

Die über die Blattfedern 64, 65 befestigte Zwischenplatte 41 und Anpressplatte 42 lassen sich mit weniger Reibung verschieben, als dies bei in einer Lamellenträgerverzahnung gelagerten Platten 41, 42 der Fall ist. Denn aufgrund der drehmomentübertragenden, festen Verbindung der Platten 41, 42 mit dem Außenlamellenträger 38 über die Blattfedern 64, 65 ist kein Reibung erzeugender Verzahnungseingriff gegeben, das heißt, dass die Elemente berührungsfrei axial bezüglich einander bewegt werden können. Dadurch lässt sich die Trennkupplung 35 mit an den Blattfedern 64, 65 befestigten Platten 41, 42 besonders gut regeln und ansteuern. Außerdem besteht keine Gefahr, dass hohe Umfangsbeschleunigungen oder ungünstige Resonanzeffekte zu Klappergeräuschen führen, wie dies bei Lamellenverzahnungen vorkommen kann.

Alternativ zu dem in Figur 3 gezeigten Beispiel kann auch nur ein Teil der in der Trennkupplung 35 verbauten axial verlagerbaren Platten, hier der Zwischenplatte 41 und der Anpressplatte 42, in einer Lamellenträgerverzahnung geführt werden und der andere Teil wird über Blattfedern befestigt. Bezogen auf Figur 3 könnte beispielsweise die Zwischenplatte 41 in der Lamellenträgerverzahnung geführt werden, wie dies exemplarisch bezüglich Figur 1 bereits beschrieben ist. Es ist zweckmäßig, in diesem Fall dann die Anpressplatte 42 mit Blattfedern zu führen, da diese weiter axial verlagert werden soll als von der Anpressplatte 42 weiter entfernte Lamellenteile.

Figur 4 zeigt ein Ausführungsbeispiel einer Trennkupplung 35, das, was den grundsätzlichen Aufbau der Trennkupplung 35 angeht, dem Ausführungsbeispiel gemäß Figur 3 entspricht. Auch hier ist die Gegenplatte 40 fest mit dem Außenlamellenträger 38 verbunden, während die Zwischenplatte 41 und die Anpressplatte 42 am Außenlamellenträger 38 über einen Verzahnungseingriff drehfest, jedoch axial bewegbar geführt sind. Der Außenlamellenträger 38 ist über einen Verzahnungseingriff mit dem Zweimassenschwungrad 36 gekoppelt, wozu dieses einen Radialflansch 52 mit einer Innenverzahnung 53 aufweist, die in die Außenverzahnung des Außenlamellenträgers 38 drehmomentübertragend eingreift. Bei der in Figur 4 gezeigten Ausführung ist darüber hinaus vorgesehen, dass ein oder mehrere den Verzahnungseingriff zwischen dem Außenlamellenträger 38 und dem Zweimassenschwungrad 36 in Umfangsrichtung vorspannende Federelemente 69 vorgesehen sind. Diese Federelemente 69 dienen dazu, das Zweimassenschwungrad 36 in Umfangsrichtung geringfügig relativ zum Außenlamellenträger 38 zu verschieben respektive zu verspannen, so dass sichergestellt ist, dass in einer Umfangsrichtung die Flanke der Innenverzahnung 53 stets an den benachbarten Flanken der Außenverzahnung des Außenlamellenträgers 38 anliegen. Dies dient dazu, ungewollte Klappergeräusche innerhalb der Steck- oder Verzahnungsverbindung zwischen dem Zweimassenschwungrad 36 und der Trennkupplung 35 zu vermeiden.

Bei dem in Figur 4 gezeigten Ausführungsbeispiel ist ein hier nur gestrichelt gezeigtes Spannelement 70 vorgesehen, dass einen sich radial nach innen erstreckenden Radialflansch 71 aufweist, von dem aus mehrere sich axial erstreckende Laschen 72 abstehen, die zwischen die ineinander greifenden Verzahnungen des Radialflanschs 52 und des Außenlamellenträgers 38 eingreifen. Das Spannelement 70 ist bevorzugt als Ringbauteil ausgeführt, so dass nur ein Element zu montieren ist. An dem Radialflansch 71 sind entsprechende Ausnehmungen oder dergleichen vorgesehen, so dass sich radialflanschseitige Abstützabschnitte ausbilden, an denen jeweils ein Federelement 69, auch hier bevorzugt eine Schraubendruckfeder, abgestützt ist. Das andere Ende des jeweiligen Federelements 69 ist an dem Radialflansch 73 des Außenlamellenträgers 38, über den dieser mit der Gegenplatte 40 verbunden ist, abgestützt.

Das oder die Federelemente 69 wirken quasi tangential, also in Umfangsrichtung und verdrehen folglich den Außenlamellenträger 38 relativ zum Radialflansch 52. Die Zähne der Verzahnung 53 können somit zwischen den Zahnflanken der Außenverzahnung des Außenlamellenträgers 38, an denen sich die Verzahnung 53 in der einen Umfangsrichtung anlegt, und den Laschen 72 des Spannelements 70, die die Verzahnung 53 gegen die erwähnten Flanken der Außenverzahnung des Außenlamellenträgers 38 drücken, eingeklemmt werden. Hierüber ist folglich eine ständige Anlage zweier Verzahnungsflanken gegeben, so dass ein Klappern ausgeschlossen werden kann.

Die Zähne der Verzahnung 53 des Radialflanschs 52 werden im Rahmen der Montage von Verbrennungsmotor und Getriebe zwischen die Gegenkonturen der Außenverzahnung des Außenlamellenträgers 38 und der Laschen 72 des Spannelements 70 geschoben.

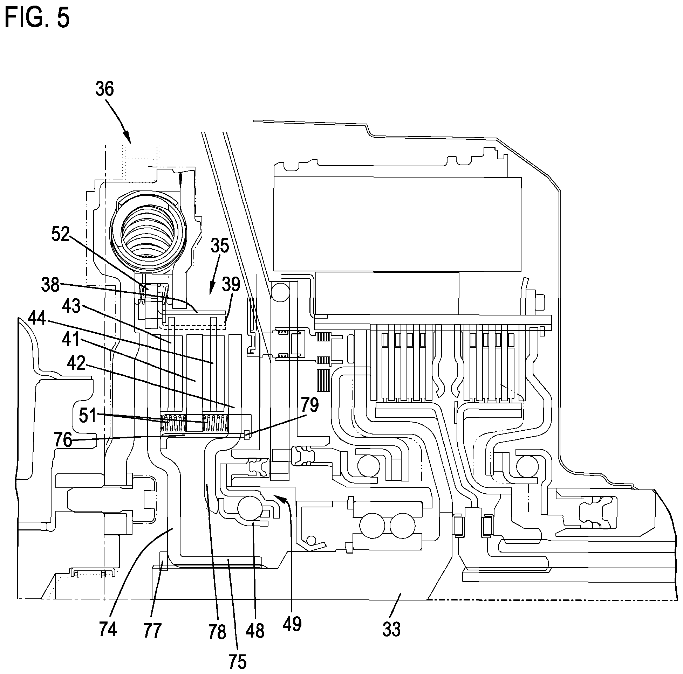

Bei der in Figur 5 gezeigten Trennkupplung 35 befindet sich die Montageschnittstelle für die Montage von Verbrennungsmotor und Getriebe ebenfalls zwischen einem fest mit dem Zweimassenschwungrad 36 verbundenen Außenlamellenträger 38, dessen Form der entspricht, wie in Bezug auf Figur 2 beschrieben, und der gegebenenfalls am Zweimassenschwungrad 36 respektive Radialflansch 52 festgenietet oder festgeschweißt werden kann, und den restlichen Bauteilen der Trennkupplung 35. Bei dem in Figur 5 gezeigten Ausführungsbeispiel greifen allerdings die Gegenplatte 40, die Zwischenplatte 41 und die Anpressplatte 42 nicht in die Innenverzahnung, wiederum dargestellt über den sie andeutenden gestrichelten Abschnitt 39, des Außenlamellenträgers 38 ein, vielmehr sind bei dieser Ausgestaltung die beiden Kupplungsscheiben 43, 44 mit ihren entsprechenden Außenverzahnungen in der Innenverzahnung des Außenlamellenträgers 38 axial beweglich, jedoch drehmomentübertragend geführt.

Die Gegenplatte 40, die Zwischenplatte 41 und die Anpressplatte 42 sind hier drehfest mit der Zwischenwelle 33 verbunden. Hierzu weist die Gegenplatte 40 einen sich radial zur Zwischenwelle 33 hin erstreckenden Flansch 74 auf, an den sich eine innenverzahnte, von der außenverzahnten Zwischenwelle 33 durchgriffene Nabe 75 anschließt. An der Gegenplatte 40 respektive dem Flansch 74 ist ein Innenlamellenträger 76 befestigt, beispielsweise mit einem Radialflansch bei L-förmigem Querschnitt daran angenietet bzw. angeschweißt, der eine Außenverzahnung aufweist. In diese Außenverzahnung greifen an der Zwischenplatte 41 und der Anpressplatte 42 ausgebildete Innenverzahnungen ein, so dass diese beiden Platten 41, 42 axial beweglich am Innenlamellenträger 76 geführt sind, gleichermaßen aber mit diesen drehfest verbunden sind. Wird das Lamellenpaket zusammengedrückt, kann über die Gegenplatte 40 und die Nabe 75 das Drehmoment auf die Zwischenwelle 33 übertragen werden.

Diese Ausgestaltung zeichnet sich also dadurch aus, dass der Außenlamellenträger 38 fest mit dem Zweimassenschwungrad 36 verbunden ist, wobei am Außenlamellenträger 38 die Kupplungsscheiben 43, 44 axial bewegbar geführt sind. Ferner ist ein Innenlamellenträger 76 vorgesehen, relativ zu dem die Anpressplatte 42 und die Zwischenplatte 41 axial bewegbar sind und der fest mit der Gegenplatte 40 verbunden ist, die ihrerseits fest mit der Zwischenwelle 33 drehfest verbunden ist.

Durch diesen Aufbau der Trennkupplung 35 kann die Gegenplatte 40 wie beschrieben fest mit der Zwischenwelle 33 verbunden werden. Ein Lager 54, wie bei den vorstehenden Ausführungsbeispielen vorgesehen, ist hier nicht mehr erforderlich, da über die Gegenplatte 40 nun nicht nur die Betätigungskräfte in die Zwischenwelle 33 eingeleitet werden, sondern auch das von der Trennkupplung übertragene Drehmoment. Da dieser Trennkupplungsaufbau seine Betätigungskräfte nicht auf der Kurbelwelle abstützt und trotzdem kein Lager 54 zum Abstützen benötigt, bietet dieser Aufbau einen großen Bauraum- und Kostenvorteil.

Die Trennkupplung 35 mit der zur Gegenplatte 40 gehörenden innenverzahnte Nabe 75 auf die außenverzahnte Zwischenwelle 33 aufgeschoben und durch einen Sicherungsring 77 gegen eine ungewollte axiale Verlagerung gesichert. Die Gegenplatte 40, die Zwischenplatte 41 und die Anpressplatte 42 sind wie beschrieben durch den Innenlamellenträger 76 miteinander verbunden, der mit der Gegenplatte 40 fest, beispielsweise durch Verschweißen oder Vernieten verbunden ist und der in eine Innenverzahnung am Innendurchmesser der Zwischenplatte 41 eingreift und die Zwischenplatte 41 dadurch positioniert, axial führt und drehfest mit der Gegenplatte 40 koppelt. An dem der Gegenplatte 40 gegenüberliegenden Ende des Innenlamellenträgers 76 ist dieser mit der Anpressplatte 42 verbunden, die er genauso wie die Zwischenplatte 41 positioniert, axial führt und verdrehfest mit der Gegenplatte 40 koppelt.

Die Anpressplatte 42 besteht aus einem radial äußeren Teil oder Abschnitt, dem eigentlichen Pressteil, und einem radial inneren Flanschteil 78, wobei die beiden Teile durch einige um den Umfang verteilte Stege radial miteinander verbunden sind. Es werden hierüber also an der Anpressplatte 42 mehrere Durchbrechungen ausgebildet, die in Umfangsrichtung über die Stege begrenzt sind. Das radial äußere Teil der Anpressplatte 42 bildet die Reibfläche für die benachbarte Kupplungsscheibe 44 und ähnelt der Zwischenplatte 41. Das radial äußere Teil der Anpressplatte 40 hat an seinem Innendurchmesser eine Zahnkontur, um in den Innenlamellenträger 76 eingreifen zu können. Diese Zahnkontur wird auf dem Umfang mehrfach durch die beschriebenen, sich radial nach innen erstreckenden Stege bzw. Durchbrechungen unterbrochen.

Der radial innere Teil der Anpressplatte 42 ist als Druckstück ausgeformt, das die Anpressplatte 42 mit dem Stützlager 48 des Betätigungssystems 49 verbindet. Das radial innere Teil der Anpressplatte 42 ist, um eine ausreichend große Steifigkeit zu gewährleisten, als ein auf dem Umfang geschlossener Bereich ausgeführt, der, wenn überhaupt, nur durch kleine, die Steifigkeit nur geringfügig beeinflussende Belüftungsöffnungen durchdrungen ist.

Damit die Stege, die das radial äußere Teil und das radial innere Teil der Anpressplatte 42 miteinander verbinden und die Durchbrechungen begrenzen, nicht gegen den Innenlamellenträger 76 stoßen, ist der Innenlamellenträger an den Stellen, an denen sich die Stege befinden, ausgespart. Das heißt, dass am Innenlamellenträger 76 sich axial erstreckende Finger ausgebildet sind, die die Durchbrechungen an der Anpressplatte 42 durchgreifen. Die Stege werden dabei in die Schlitze zwischen den Fingern eingeführt. Die Stege können axial innerhalb dieser Schlitze hin- und herwandern, wenn die Anpressplatte 42 von dem Betätigungssystem 49 axial bewegt wird. Die Schlitze des Innenlamellenträgers 76 reichen axial nur so tief in den Innenlamellenträger 76 hin, wie es der Bewegungsbereich der Anpressplatte 42 erfordert. Der Rest des Innenlamellenträgers 76 ist umlaufend geschlossen, um eine ausreichende Steifigkeit zu erzielen. Wenn es die Belüftung erfordert und die Steifigkeit des Innenlamellenträgers 76 es zulässt, können in diesem Bereich auch vereinzelte kleine Belüftungsöffnungen vorhanden sein.

Denkbar ist es, dass die auf dem Umfang verteilte Stege zwischen dem radial äußeren und dem radial inneren Teil der Anpressteil 42 in den Schlitzen des Innenlamellenträgers 76 axial geführt werden. In diesem Fall ist die Breite der Finger des Innenlamellenträgers 76 und die Breite der Durchbrechungen derart aufeinander abgestimmt, dass die Anpressplatte 42 am Innenlamellenträger 76 axial geführt und mit diesen drehfest verbunden werden kann. Wenn also die Positionierung der Anpressplatte 42, die axiale Führung und die Drehmomentübertragung durch den Kontakt zwischen den Stegen und den Fingern respektive Schlitzen erfolgt, braucht der Innenlamellenträger 76 im Bereich der Anpressplatte 42 keine Zahnkontur mehr auszubilden und auch der radial äußere Teil der Anpressplatte 42 braucht nicht mehr mit einer Innenverzahnung versehen zu werden.

Auch bei der in Figur 5 gezeigten Trennkupplung 35 kann das Öffnen durch Federelemente 51 zwischen der Gegenplatte 40 und der Zwischenplatte 41 und der Zwischenplatte 41 und der Anpressplatte 42 unterstützt werden. Selbstverständlich ist es auch möglich, Federelemente zwischen der Gegenplatte 40 und der Anpressplatte 42 anzuordnen. Alternativ kann auch das in Figur 3 gezeigte Prinzip, die Zwischenplatte 41 und/oder die Anpressplatte 42 mit Blattfedern axial verlagerbar und drehmomentübertragend zu befestigen, sinngemäß auch auf die in Figur 5 gezeigte Trennkupplung 35 übertragen werden. Die Blattfedern werden dann nicht radial außerhalb der Kupplungsscheiben 43, 44, sondern radial innerhalb des Kupplungsscheibeninnendurchmessers angeordnet.

Um auch bei der in Figur 5 gezeigten Trennkupplung 35 die Montage des Verbrennungsmotors an das Getriebe zu erleichtern, können die beiden Kupplungsscheiben 43, 44 durch ein Ausrichtelement, ähnlich wie bezüglich Figur 2 beschrieben, gegen ein Verdrehen relativ zueinander gesichert werden. Dadurch fluchten bei der Montage von Verbrennungsmotor und Getriebe die Zahnlücken der beiden Kupplungsscheiben 43, 44, so dass die Verzahnung des am Radialflansch 52 des Zweimassenschwungrads 36 befestigten Lamellenträgers 38 leicht in die Zahnlücken der Kupplungsscheiben 43, 44 eingeschoben werden kann. Die für das Ausrichtelement 60 des Ausführungsbeispiels gemäß Figur 2 beschriebenen Details lassen sich sinngemäß auch auf das Ausrichtelement, das die beiden Kupplungsscheiben 43, 44 ausrichtet, übertragen. Statt eines oder mehrere separater Teile, die das Ausrichtelement bilden, können die zum Ausrichten der beiden Scheiben dienende Laschen auch an den ohnehin vorhandenen Kupplungsscheibenbauteilen, wie beispielsweise den Belagsfederungssegementen ausgeformt werden. Bei der in Figur 5 gezeigten Trennkupplung 35 muss das gegebenenfalls vorzusehende Ausrichtelement nur die Kupplungsscheibenverzahnungen ausrichten. Die Trennkupplungsbauteile zu einer verliersicheren Unterbaugruppe für den Transport und den Montagevorgang zusammenfassen ist nicht erforderlich.

Diese Montagesicherung kann bei der in Figur 5 gezeigten Trennkupplung über den Innenlamellenträger 36 realisiert werden, der die Trennkupplungsbauteile zusammenhält, indem er verhindert, dass die Anpressplatte 42 ungewollt vom Innenlamellenträger 76 herunterrutscht. Hierzu kann entweder der Rand des Innenlamellenträgers 76 hinter der Anpressplatte 42, diese dann hintergreifend, umgebogen werden (ähnlich wie dies im Prinzip in Figur 1 gezeigt ist), oder es wird hinter der Anpressplatte 42 ein Sicherungsring 79, wie in Figur 5 gezeigt, vorgesehen, der in eine entsprechende Ringnut am Innenlamellenträger 76 eingesetzt ist.

Wenn bei der Montage des Verbrennungsmotors an das Getriebe der am Zweimassenschwungrad 36 befestigte Außenlamellenträger 38 in die radial außen an den Kupplungsscheiben 43, 44 vorgesehenen Außenverzahnungen eingeschoben wird, können während des Montagevorgangs große axiale Kräfte auf die radial äußeren Bereiche der Kupplungsscheiben 43, 44 wirken. Diese Kräfte lassen sich durch die beschriebenen Ausrichtelemente senken, die dafür sorgen, dass die Zahnlücken der Kupplungsscheiben 43, 44 fluchten. Zusätzlich oder alternativ können auch schräge Flächen neben den Zahnlücken vorgesehen werden, die, wie zuvor bereits bezüglich Figur 2 beschrieben, die Zähne der Innenverzahnung des Außenlamellenträgers 38 leichter in die Zahnlücken der Kupplungsscheiben 43, 44 gleiten lassen. Diese schrägen Flächen können an dem dem Zweimassenschwungrad 36 abgewandten Ende des Außenlamellenträgers 38 und/oder an den dem Zweimassenschwungrad zugewandten Seiten der Kupplungsscheiben 43, 44 vorgesehen sein. Trotzdem ist es zweckmäßig, den radial äußeren Teil der Kupplungsscheiben 43, 44 robust auszulegen, damit diese Bereiche Axialkräfte ertragen können, die deutlich über die im späteren Kupplungsbetrieb zu erwartenden Axialkräfte hinausgehen.

Bei dem in Figur 5 gezeigten Ausführungsbeispiel macht der Mittelbereich der Kupplungsscheiben 43, 44, der radial außen die Verbindungskontur zum Außenlamellenträger 38 ausbildet, bereits über 25 % des Gesamtabstands zwischen den zwei auf den beiden gegenüberliegenden Seiten der Kupplungsscheiben 43, 44 vorhandenen Scheibenreibflächen aus. Damit macht der mittlere Bereich der Kupplungsscheiben 43, 44 einen deutlich größeren Anteil an der ungespannten Gesamtbreite der Kupplungsscheiben 43, 44 aus, als dies beispielsweise die Belagfederungssegmente und die Trägerbleche bei handelsüblichen Kupplungsscheiben ausmachen. Für die hier gezeigte Trennkupplung 35 ist es sinnvoll, den axial schmalsten auf dem Umfang laufenden Bereich der jeweiligen Kupplungsscheibe 43, 44, der sich radial zwischen dem Außendurchmesser der Reibflächen und dem Innendurchmesser der Verbindungskontur (Verzahnungskontur) befindet, axial so breit zu machen, dass er 20 % - 100 % des Gesamtabstands zwischen den zwei auf den beiden gegenüberliegenden Seiten der ungespannten Kupplungsscheibe 43, 44 vorhandenen Scheibenreibflächen ausmacht. Der radial etwas von den Reibflächen beabstandete Bereich der Verbindungskontur (Verzahnungskontur) kann sogar noch etwas breiter ausgeführt werden. Für diese Trennkupplung und für die anderen hier gezeigten Lamellen- oder Mehrscheibenkupplungen ist es sinnvoll, den Bereich der Verbindungs- oder Verzahnungskontur, mit denen die Kupplungsscheiben mit einem Lamellenträger in Wirkverbindung stehen, so breit zu machen, dass er 50 % - 200 % des Gesamtabstands zwischen den zwei auf den beiden gegenüberliegenden Seiten der ungespannten Kupplungsscheibe vorhandenen Scheibenreibflächen ausmacht. Sollten die drehfest mit dem Zweimassenschwungrad 36 verbundenen Kupplungsbauteile nicht als Kupplungsscheiben sondern als andersartige Lamellen ausgeführt werden, gelten die hier für die Kupplungsscheiben beschriebenen Maßnahmen ebenso.

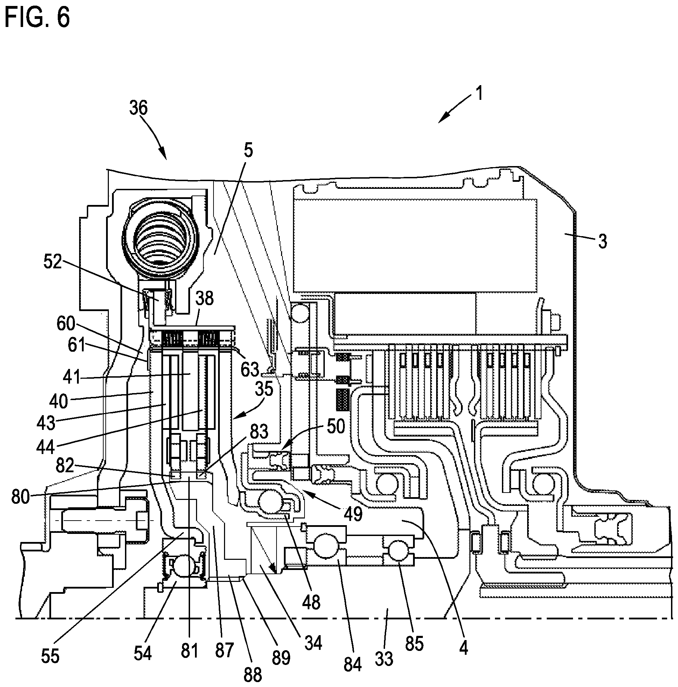

Figur 6 zeigt ein weiteres Ausführungsbeispiel eines Hybridmoduls, wobei der grundsätzliche Aufbau der Trennkupplung dem aus Figur 2 ähnlich ist. Das heißt, dass auch hier der Außenlamellenträger 38 wieder fest über Niet- oder Schweißverbindungen mit einem Radialflansch 52 des Zweimassenschwungrads 36 verbunden ist. Auch hier ist die Montageschnittstelle wiederum zwischen dem Außenlamellenträger 38 und den mit ihm lösbar gekoppelten, über jeweilige Verzahnungseingriffe drehfest, jedoch axial versetzbaren Bauelementen der Trennkupplung 35, hier also der Gegenplatte 40, der Zwischenplatte 41 und der Anpressplatte 42 gegeben.

Die Gegenplatte 40 ist auch hier wiederum über einen verlängerten Flanschabschnitt, an dem ein Lagersitz 55 ausgebildet ist, und über ein Lager 54 auf der Zwischenwelle 33 drehgelagert. Die Anpressplatte 42 ihrerseits ist wiederum über einen verlängerten Flanschabschnitt mit dem Lager 48 verbunden und an diesem abgestützt, das seinerseits als Teil des Betätigungssystems 49 über die Kolben-Zylinder-Einheit 50 axial betätigbar ist.

Anders als bei der beispielsweise in Figur 2 beschriebenen Ausführungsform ist hier jedoch die Anbindung der beiden Kupplungsscheiben 43, 44 zur Zwischenwelle 33. Statt, wie in Figur 2 vorgesehen, eine der Kupplungsscheiben radial nach innen zu verlängern und direkt mit der Zwischenwelle zu verbinden, sind gemäß Figur 6 die beiden Kupplungsscheiben 43, 44 über einen gemeinsamen Innenlamellenträger 80 mit der Zwischenwelle 33 verbunden. Der Innenlamellenträger 80 weist eine Außenverzahnung 81 auf, in die die Kupplungsschreiben 43, 44 mit entsprechenden Innenverzahnungen 82, 83 eingreifen. Die Kupplungsscheiben 43, 44 sind demzufolge am Innenlamellenträger 80 axial bewegbar geführt, jedoch drehfest und damit moment-übertragend mit dem Innenlamellenträger 80 verbunden. Der Innenlamellenträger 80 kann somit starr, also axial positionsfest und drehfest mit der Zwischenwelle 33 verbunden werden, er ist also selbst, anders bei den vorstehenden Ausführungsbeispielen gemäß der Figuren 1 4, axial nicht beweglich, da die Axialbewegung im Bereich des Verzahnungseingriffs am Innenlamellenträger 80 zu den Kupplungsscheiben 43, 44 erfolgt. Eine solche Verbindung von Innenlamellenträger 80 zur Zwischenwelle 33, in der keine Gleitbewegungen auftreten, kann deutlich kleiner ausgeführt werden als beispielsweise bei dem in Figur 2 gezeigten Beispiel. Der so gewonnene axiale Bauraum wurde bei dem in Figur 6 gezeigten Hybridmodul 1 genutzt, um das Dichtelement 34, das den Nassraum 3 vom Trockenraum 5 trennt, axial in Richtung der Trennkupplung 35 zu verlegen. Hierdurch ist mehr axialer Platz für die Lagerung der Zwischenwelle 33 auf der Stützwand 4 gegeben. Figur 6 zeigt beispielsweise eine Lagerung mit zwei separaten Lagern 84, 85, statt des einen zweireihigen Lagers 86, wie bei den vorstehenden Ausführungsbeispielen gezeigt.

Der Innenlamellenträger 80 weist zur Verbindung mit der Zwischenwelle 33 einen sich radial nach innen erstreckenden Flansch 87 sowie eine daran anschließende, innenverzahnte Nabe 88 auf, die in eine Außenverzahnung an der Zwischenwelle 33 greift. Axial in die eine Richtung ist der Innenlamellenträger 80 an einem ringbundartigen Anschlag 89 der Zwischenwelle 33 abgestützt, an der anderen Seite erfolgt die Abstützung über das axial positionsfeste Lager 54 bzw. dessen Innenring.

Axial an die Nabe 88 schließt sich das Dichtelement 34 an, das im gezeigten Ausführungsbeispiel innerhalb des Stützlagers 48, über das die Anpressplatte 42 axial abgestützt ist, positioniert ist.

Im gezeigten Beispiel ist ebenso ein Ausrichtelement 60 vorgesehen, das an der Anpressplatte 42, der Zwischenplatte 41 und der Gegenplatte 40 ausgebildete Außenverzahnungen, die in die sich axial erstreckende Innenverzahnung des Außenlamellenträgers 38 eingreifen, axial ausrichten. Auch hier weist das Ausrichtelement 60 an beiden Seiten entsprechende Umgriffabschnitte in Form des Radialflansches 61 und des umgebogenen Endes 63 auf, die die Gegenplatte 40 und die Anpressplatte 42 hinter- oder übergreifen, so dass hierüber eine Axialsicherung gegeben ist. Bezüglich weiterer Einzelheiten wird auf die ausführliche Beschreibung des Ausrichtelements 60 gemäß Figur 2 verwiesen.

Abschließend ist festzuhalten, dass alle für die verschiedenen Ausführungsformen und Ausführungsbeispiele beschriebenen Merkmale beliebig miteinander kombinierbar sind. Details des einen Ausführungsbeispiels einer Figur können unverändert oder sinngemäß auch auf die anderen Ausführungsbeispiele gemäß der anderen Figuren übertragen werden. Sämtliche mögliche und technisch sinnvolle Kombinationen von Merkmalen, die in den unterschiedlichen Ausführungsbeispielen gezeigt respektive offenbart sind, sind demzufolge erfindungswesentlich und können entsprechend beliebig kombiniert werden, selbst wenn ein konkretes Kombinationsbeispiel nicht offenbart ist.

Die Richtungsangaben axial, radial, tangential und in Umfangsrichtung beziehen sich auf die Rotationsachse, um die sich die jeweilige Kupplung, die Kupplungsbauteile wie Scheiben, Platten oder der Rotor der Elektromaschine drehen. Somit ist die axiale Richtung orthogonal zu den Reibflächen der Reibpartner der jeweiligen Kupplungen.

Obgleich die vorliegende Erfindung vorstehend anhand von Ausführungsbeispielen beschrieben worden ist, versteht es sich, dass verschiedene Ausgestaltungen und Änderungen durchgeführt werden können, ohne den Umfang der vorliegenden Erfindung zu verlassen, wie er in den beiliegenden Ansprüchen definiert ist.

## Patentansprüche

1. Hybridmodul für einen Antriebsstrang eines Kraftfahrzeugs, umfassend eine Elektromaschine (6), eine Kupplungsvorrichtung (9) sowie eine Trennkupplung (35), wobei die Trennkupplung (35) einerseits mit einem Zweimassenschwungrad (36) und andererseits mit einer Zwischenwelle (33) gekoppelt ist und ein in Reibschluss bringbares Paket umfassend eine Anpressplatte (42), eine Gegenplatte (40) sowie wenigstens eine Zwischenplatte (41) und zwischen diese eingreifende Kupplungsscheiben (43, 44) aufweist, wobei die Anpressplatte (40), die Zwischenplatte (41) und die Kupplungsscheiben (43, 44) axial bewegbar sind, wobei die Gegenplatte (40) fest mit einem Außenlamellenträger (38) verbunden ist, **dadurch gekennzeichnet, dass** die Zwischenplatte (41) und die Anpressplatte (42) am Außenlamellenträger (38) über einen Verzahnungseingriff drehfest, jedoch axial bewegbar geführt sind, wobei der Außenlamellenträger (38) über einen Verzahnungseingriff mit dem Zweimassenschwungrad (36) gekoppelt ist, wobei ein oder mehrere den Verzahnungseingriff zwischen dem Außenlamellenträger (38) und dem Zweimassenschwungrad (36) in Umfangsrichtung vorspannende Federelemente (69) vorgesehen sind, wobei wenigstens ein zwischen eine Außenverzahnung des Außenlamellenträgers (38) und eine Innenverzahnung des Zweimassenschwungrads (36), die ineinander greifen, eingreifendes Spannelement (70) vorgesehen ist, wobei das oder die Federelemente (69) zwischen dem Spannelement (70) und dem Außenlamellenträger (38) angeordnet sind, wobei das oder jedes Spannelement (70) einen sich nach innen erstreckenden Radialflansch (71) aufweist, an dem ein oder mehrere Abstützabschnitte vorgesehen sind, an denen sich das oder die Federelemente (69) mit einem Ende abstützen, wobei am Außenlamellenträger (38) ebenfalls ein oder mehrere Abstützabschnitte vorgesehen sind, an denen sich das oder die Federelemente (69) mit dem anderen Ende abstützen.

2. Hybridmodul nach Anspruch 1, **dadurch gekennzeichnet, dass** das Spannelement (70) ringförmig ist, oder dass mehrere separate, in Umfangsrichtung verteilt angeordnete Spannelemente vorgesehen sind.

3. Hybridmodul nach Anspruch 1 oder 2, **dadurch gekennzeichnet, dass** das oder jedes Spannelement (70 mehrere sich axial erstreckende Laschen (72) aufweist, die zwischen die Außenverzahnung und die Innenverzahnung greifen.

4. Hybridmodul nach einem der vorangehenden Ansprüche, **dadurch gekennzeichnet, dass** das oder jedes Federelement (69) als Schraubenfeder ausgeführt ist.

5. Hybridmodul nach Anspruch 4, **dadurch gekennzeichnet, dass** die oder jede Schraubenfeder in Umfangsrichtung angeordnet ist.

6. Hybridmodul nach einem der vorangehenden Ansprüche, **dadurch gekennzeichnet, dass** an dem oder jedem Spannelement (70) an der dem Zweimassenschwungrad (36) benachbarten Seite eine oder mehrere Einführkonturen, über die die Innenverzahnung des Zweimassenschwungrads (36) in die Au-ßenverzahnung des Außenlamellenträgers (38) einführbar ist, vorgesehen sind.

## Claims

1. A hybrid module for a drive train of a motor vehicle, comprising an electric machine (6), a clutch device (9) and a separating clutch (35), wherein the separating clutch (35) is coupled, on the one hand, to a dual mass flywheel (36) and, on the other hand, to an intermediate shaft (33) and has a frictionally engaging package comprising a pressure plate (42), a counter plate (40) and at least one intermediate plate (41) and clutch discs (43, 44) engaging between these plates, wherein the pressure plate (40), the intermediate plate (41) and the clutch discs (43, 44) are axially movable, the counter plate (40) being fixedly connected to an outer disc support (38), **characterized in that** the intermediate plate (41) and the pressure plate (42) on the outer disc support (38) are guided non-rotatably, but axially movably via a toothing engagement, wherein the outer disc support (38) is coupled to the dual mass flywheel (36) via a toothing engagement, wherein one or more spring elements (69) are provided that pretension the toothing engagement between the outer disc support (38) and the dual mass flywheel (36) in the circumferential direction, wherein at least one tensioning element (70) is provided that engages between an external toothing of the outer plate support (38) and an internal toothing of the dual mass flywheel (36), which mesh together, wherein the or each spring element (69) is arranged between the tensioning element (70) and the outer plate support (38), wherein the or each tensioning element (70) has an inwardly extending radial flange (71) on which one or a plurality of support sections are provided on which the spring element(s) (69) bear at one end, wherein the outer plate support (38) also has one or a plurality of support sections on which the spring element(s) (69) bear at the other end.

2. The hybrid module according to claim 1, **characterized in that** the tensioning element (70) is annular or **in that** a plurality of separate tensioning elements are provided distributed in the circumferential direction.

3. The hybrid module according to claim 1 or 2, **characterized in that** the or each tensioning element (70) has a plurality of axially extending tabs (72) which engage between the external toothing and the internal toothing.

4. The hybrid module according to one of the preceding claims, **characterized in that** the or each spring element (69) is designed as a helical spring.

5. The hybrid module according to claim 4, **characterized in that** the or each helical spring is arranged in the circumferential direction.

6. The hybrid module according to one of the preceding claims, **characterized in that** on the or each tensioning element (70) on the side adjacent to the dual mass flywheel (36) one or a plurality of insertion contours are provided, via which the internal toothing of the dual mass flywheel (36) can be inserted into the external toothing of the outer disc support (38).

## Revendications

1. Module hybride pour un groupe motopropulseur d'un véhicule automobile, comprenant un moteur électrique (6), un dispositif d'embrayage (9) et un embrayage de coupure (35), l'embrayage de coupure (35) étant accouplé d'un côté à un volant bimasse (36) et de l'autre côté à un arbre intermédiaire (33) et comportant un ensemble pouvant créer une liaison par friction comprenant un plateau de pression (42), un plateau de réaction (40) et au moins un plateau intermédiaire (41), ainsi que des disques d'embrayage (43, 44) en prise entre ceux-ci, le plateau de pression (40), le plateau intermédiaire (41) et les disques d'embrayage (43, 44) étant mobiles axialement, le plateau de réaction (40) étant fixé solidement sur un support de disques extérieurs (38), **caractérisé en ce que** le plateau intermédiaire (41) et le plateau de pression (42) sont guidés solidaires en rotation sur le support de disques extérieurs (38) par l'intermédiaire d'un engrènement, mais sont mobiles axialement, le support de disques extérieurs (38) étant accouplé au volant bimasse (36) par l'intermédiaire d'un engrènement, un ou plusieurs éléments élastiques (69) assurant la précontrainte de l'engrènement entre le support de disques extérieurs (38) et le volant bimasse (36) dans la direction circonférentielle, au moins un élément de serrage (70) étant prévu entre une denture extérieure du support de disques extérieurs (38) et une denture intérieure du volant bimasse (36), qui viennent en prise l'une dans l'autre, le ou les éléments élastiques (69) étant disposés entre l'élément de serrage (70) et le support de disques extérieurs (38), le ou chaque élément de serrage (70) comportant une bride radiale (71) s'étendant vers l'intérieur, sur laquelle sont prévues une ou plusieurs sections d'appui sur lesquelles le ou les éléments élastiques (69) sont supportés à une extrémité, une ou plusieurs sections d'appui étant également prévues sur le support de disques extérieurs (38), sur lesquelles le ou les éléments élastiques (69) sont supportés à l'autre extrémité.

2. Module hybride selon la revendication 1, **caractérisé en ce que** l'élément de serrage (70) est annulaire ou **en ce qu'**il est prévu plusieurs éléments de serrage séparés répartis dans la direction circonférentielle.

3. Module hybride selon la revendication 1 ou 2, **caractérisé en ce que** le ou chaque élément de serrage (70) présente une pluralité de pattes s'étendant axialement (72) qui viennent en prise entre la denture extérieure et la denture intérieure.

4. Module hybride selon l'une quelconque des revendications précédentes, **caractérisé en ce que** le ou chaque élément élastique (69) est réalisé sous forme de ressort hélicoïdal.

5. Module hybride selon la revendication 4, **caractérisé en ce que** le ou chaque ressort hélicoïdal est disposé dans la direction circonférentielle.

6. Module hybride selon l'une quelconque des revendications précédentes, **caractérisé en ce que**, sur le ou chaque élément de serrage (70) du côté adjacent au volant bimasse (36), sont prévus un ou plusieurs contours d'insertion, par lesquels la denture intérieure du volant bimasse (36) peut être introduite dans la denture extérieure du support de disques extérieurs (38).
